**Europäisches Patentamt**

**European Patent Office**

**Office européen des brevets**

(11) Veröffentlichungsnummer: **0 061 994**

A2

## (12) EUROPÄISCHE PATENTANMELDUNG

(21) Anmeldenummer: **82810057.8**

(22) Anmeldetag: **10.02.82**

(51) Int. Cl.³: **B 62 D 27/02**
**B 62 D 25/02, B 62 D 25/20**
**E 04 C 2/08**

(30) Priorität: 24.03.81 CH 1981/81

(43) Veröffentlichungstag der Anmeldung:
06.10.82 Patentblatt 82/40

(84) Benannte Vertragsstaaten:
AT BE CH DE FR GB IT LI LU NL SE

(71) Anmelder: **SCHWEIZERISCHE ALUMINIUM AG**

**CH-3965 Chippis(CH)**

(72) Erfinder: **Dossena, Claudio**
**Schwyzerstrasse 34**
**CH-8805 Richterswil(CH)**

(72) Erfinder: **Bucher, Anton**
**Ehrendingerstrasse 84**
**CH-5400 Ennetbaden(CH)**

(54) **Keilförmiges Verbindungselement zum schnellen und festen Verbinden von Profilen.**

(57) Die Erfindung betrifft ein keilförmiges Verbindungselement zum schnellen und festen Verbinden von vorzugsweise im Strangpressverfahren hergestellten Profilen.

Bekannt ist beispielsweise gemäss der FR-PS 1 530 016, Figur 3, ein keilförmiges Verbindungelement von Hohlprofilen, welche mit Hilfe desselben zwar schnell und einfach, jedoch nicht fest miteinander verbunden werden können, wie dieses bei Tragkonstruktionen erwünscht ist.

Zum schnellen und festen Verbinden der einzelnen Teile einer Tragkonstruktion gelangt vorteilhafterweise gemäss der Erfindung ein aus mindestens zwei keilförmigen Teilen bestehendes Verbindungselement 10 oder 70 zur Anwendung welches beidseitig jeweils zwei schräg geneigte Flächen 30 und 32 bzw. 56 und 58 aufweist, welche mit an Ausnehmungen 16 und 18 von zu verbindenden Holprofilen 12 und 14 angeordenten schräg geneigten Flächen 82 und 84 im Eingriff stehen.

Fig. 1

Keilförmiges Verbindungselement zum schnellen und festen
Verbinden von Profilen

Die Erfindung betrifft ein keilförmiges Verbindungselement
zum schnellen und festen Verbinden von vorzugsweise im
Strangpressverfahren hergestellten Profilen, insbesondere
zum Verbinden von Hohlprofilen auf Stoss, welche Bestandteile einer Tragkonstruktion sind, und beispielsweise im
Fahrzeugbau zur Anwendung gelangen.

Profile der vorbezeichneten Art werden in vielen Fällen in
einer verhältnismässig aufwendigen Art und Weise derart miteinander verschweisst, dass diese den an eine Tragkonstruktion üblicherweise zu stellenden Anforderungen bezüglich der
Belastbarkeit gerecht werden. Hierbei werden die Hohlprofile
sowie besonders auch die Verbindungsstellen derselben auf
Zug, Druck und Biegung beansprucht.

Gemäss der FR-PS 1 530 016, Figur 3, ist beispielsweise ein
keilförmiges Verbindungselement zum schnellen Verbinden von
Hohlprofilen, welche auf Stoss aneinanderliegen, bekannt.
Für die Anwendung an einer Tragkonstruktion sind diese Verbindungselemente jedoch nicht in jedem Fall gut geeignet, da
zwischen den einzelnen, über Feder und Nut mit Hilfe eines
Keiles verbundenen Profilen im Bereich der Verbindungsstellen
stets eine Toleranz besteht, die besonders bei Tragkonstruktionen oft nicht erwünscht ist. - Bei derartigen Tragkonstruktionen ist man vielmehr bestrebt, die einzelnen Profile derselben in einer verhältnismässig einfachen Weise nicht nur
schnell sondern auch fest miteinander verbinden zu können.

Für Tragkonstruktionen ist das erfindungsgemässe Verbindungselement besonders gut geeignet, da mit Hilfe desselben die einzelnen Profile in einfacher Weise schnell und fest, d.h. spielfrei (ohne Toleranz) miteinander zu verbinden sind. Um derartige Tragkonstruktionen herzustellen, hatte man bisher in einer zeitraubenden und kostspieligen Art und Weise die einzelnen Profile miteinander verschweisst oder in einzelnen Fällen auch miteinander verschraubt oder vernietet. Als nachteilig hat sich weiterhin gezeigt, dass für die herkömmlichen Schweissverfahren nur qualifizierte Arbeitskräfte eingesetzt werden können, um eine Tragkonstruktion der vorbeschriebenen Art herzustellen.

Der vorliegenden Erfindung liegt nunmehr die Aufgabe zugrunde, ein keilförmiges Verbindungselement zum schnellen und festen Verbinden von Profilen, insbesondere von Profilen einer Tragkonstruktion zu schaffen, welche beispielsweise im Fahrzeugbau zur Anwendung gelangen, und mit welchen die dem herkömmlichen Verbindungsverfahren anhaftenden vorbeschriebenen Nachteile vermieden werden.

Erfindungsgemäss wird diese Aufgabe durch die Kombination folgender Merkmale gelöst:

a)  dass das Verbindungselement aus mindestens zwei Teilen besteht, und

b)  dass an zwei Seiten eines Verbindungselementes jeweils zwei schräg geneigte Flächen vorgesehen sind, welche

c)  mit an Ausnehmungen von zu verbindenden Hohlprofilen angeordneten schräg geneigten Flächen im Eingriff stehen.

Weitere vorteilhafte Ausführungsformen der Erfindung sind aus der nachfolgenden Beschreibung im Zusammenhang mit der Zeichnung zu entnehmen.

Die Zeichnung zeigt zwei Ausführungsbeispiele der Erfindung in vereinfachter Darstellungsweise und zwar:

Fig. 1    eine Vorderansicht auf zwei mit Hilfe eines Verbindungselementes miteinander verbundene Hohlprofile,

Fig. 2    eine Seitenansicht auf zwei einer Verbindungseinheit bildende keilförmige Verbindungselemente gemäss einem ersten Ausführungsbeispiel,

Fig. 3    eine Vorderansicht auf die in der Figur 2 gezeigten, paarweise angeordneten Verbindungselemente,

Fig. 4    eine Seitenansicht auf ein Verbindungselement gemäss einem zweiten Ausführungsbeispiel,

Fig. 5    eine Vorderansicht auf das in der Figur 4 gezeigte Verbindungselement,

Fig. 6    eine Seitenansicht auf zwei zusammengelegte Keile des Verbindungselementes gemäss dem zweiten Ausführungsbeispiel,

Fig. 7    eine Vorderansicht auf die in der Figur 6 gezeigten Keile,

Fig. 8    eine besondere Ausgestaltung einer Oberfläche der in den Figuren 2 und 3 sowie 6 und 7, gezeigten Keile,

Fig. 9    eine Seitenansicht auf eine aus den in den Figuren 4-8 gezeigten Teilen bestehende Verbindungseinheit gemäss dem zweiten Ausführungsbeispiel,

Fig. 10    eine Vorderansicht auf die in der Figur 9 gezeigte
           Verbindungseinheit,

Fig. 11    einen Querschnitt durch zwei mit Hilfe eines Ver-
           bindunselementes verbundene Holprofile einer Trag-
           konstruktion,

Fig. 12    eine Draufsicht auf die in der Figur 11 gezeigte
           Tragkonstruktion und

Fig. 13    einen Längsschnitt durch die in der Figur 12 gezeigte Tragkonstruktion gemäss der Linie XIII-XIII

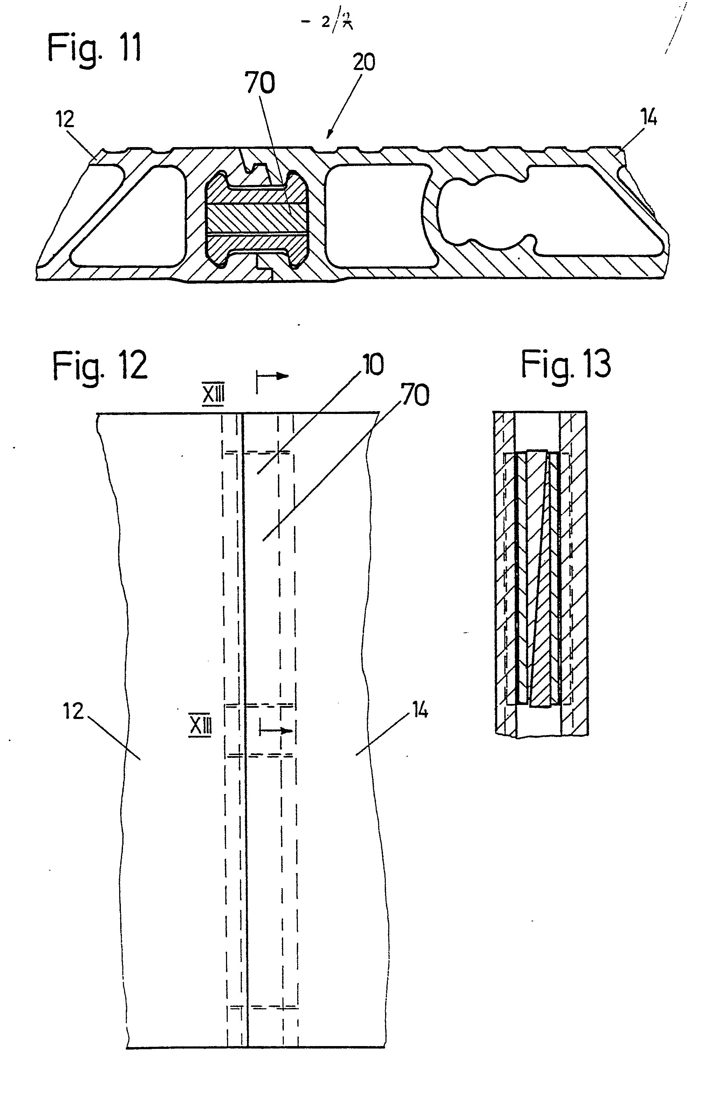

           in der Figur 12.

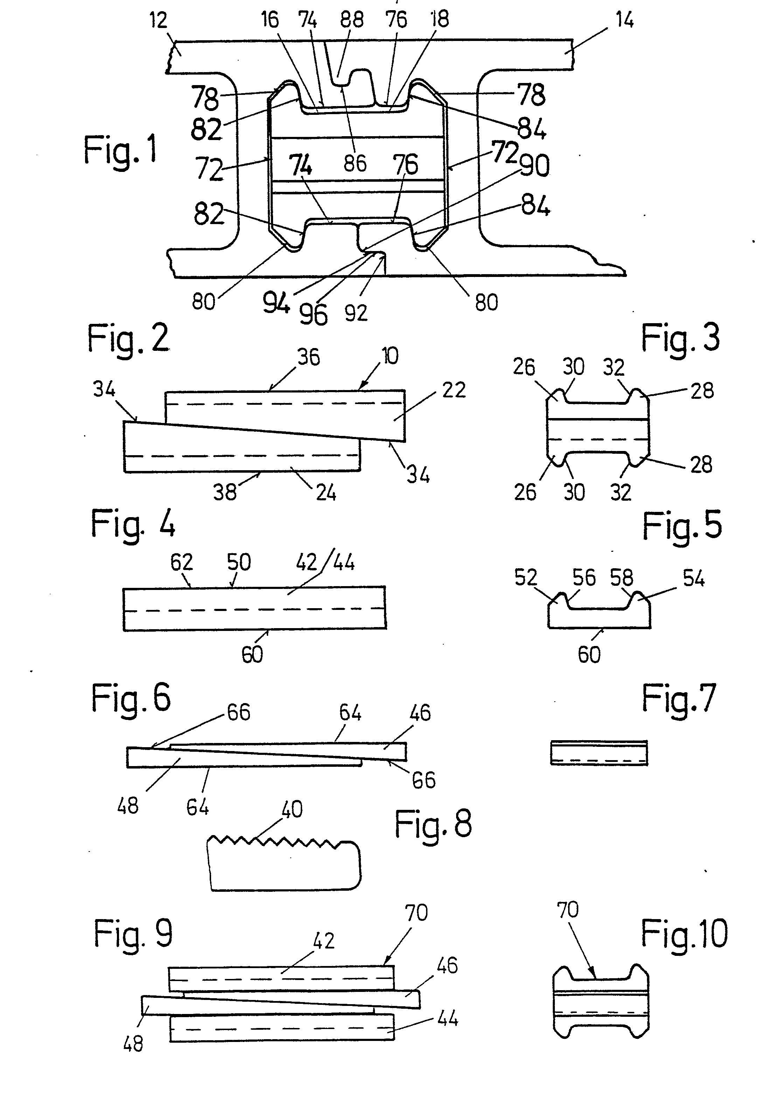

Aus den Figuren 1 bis 12 sind zwei Ausführungsbeispiele eines
Verbindungselementes 10 bzw. 70 zu ersehen. Das Verbindunselement 10 besteht gemäss dem ersten Ausführungsbeispiel 10
aus zwei Teilen und das Verbindungselement 70 gemäss dem
zweiten Ausführungsbeispiel aus vier Teilen. Die mit Hilfe
der Verbindungselemente 10 oder 70 zu verbindenden Hohlprofilteile 12 und 14 einer Tragkonstruktion 20 weisen an ihren
auf Stoss zu verbindenden Seiten jeweils eine Ausnehmung 16
bzw. 18 auf, welche gemeinsam der äusseren Kontur der Verbindungselemente 10 oder 70 angepasst sind.

Bei dem ersten Ausführungsbeispiel eines Verbindungselementes
10 sind, wie in den Figuren 1,2 und 3 dargestellt, zwei auf
einer Seite in der Längsrichtung eine U-förmige Kontur aufweisende Keile 22 und 24 vorgesehen. Die beiden Keile 22
und 24 sind, wie in der Figur 1 gezeigt, zwecks Verbindung
von Hohlprofilen 12 und 14 der Tragkonstruktion 20 in die
Ausnehmungen 16 und 18 der beiden Hohlprofilteile 12 und 14
eingeschoben worden. Die Keile 22 und 24 weisen jeweils auf
ihrer Innenseite der die U-förmige Kontur bildenden Schenkel 26 und 28 eine schräg geneigte Fläche 30 und 32 auf, welche gemeinsam in Richtung zu einer Basisfläche 34 des Keiles 22 oder 24 konvergierend zueinander verlaufen. Die Basisfläche 34 eines jeden Keiles 22 und 24 erstreckt sich über die gesamte Länge desselben und ist schräg geneigt angeordnet. Bei aneinanderliegenden Keilen 22 und 24 verläuft, wie in den Figuren 2 und 3 dargestellt, die äussere Kante 36 des Keiles 22 in jeder Position der beiden Keile zueinander stets in einem parallelen Abstand von der äusseren Kante 38 des Keiles 24. Bezüglich der Ausbildung der Basisfläche 34 eines jeden Keiles 22 oder 24 ist besonders darauf hinzuweisen, dass diese wie in der Fig. 8 gezeigt mit einer quer zur Längsrichtung des Keiles verlaufenden Riffelung 40 versehen sein können, um das Gleitvermögen dieser Flächen zu vermindern.

Gemäss dem zweiten Ausführungsbeispiel besteht das Verbindungselement 70 aus den in den Figuren 4-8 gezeigten vier Teilen, und zwar aus zwei langgestreckten Teilen 42 und 44, welche mit den zu verbindenden Profilen 12 und 14 in Eingriff gebracht werden können und zwei Keilen 46 und 48, welche, wie in der Figur 9 gezeigt, zwischen den beiden keilförmig ausgebildeten Teilen 42 und 44 angeordnet sind und gemeinsam mit denselben eine Verbindungseinheit bzw. das Verbindungselement 70 bilden.

Die beiden langgestreckten Teile 42 und 44 weisen jeweils in der Längsrichtung auf einer Seite 50 eine U-förmige Kontur auf, deren diese Kontur bildenden Schenkel 52 und 54 auf ihrer Innenseite mit schräg geneigten Flächen 56 und 58 versehen sind, welche gemeinsam in die Richtung zu einer Basisfläche 60 der Teile 42 und 44 konvergierend zueinander verlaufen. Die Basisfläche 60 verläuft in der Längsrichtung parallel zur oberen Kante 62 auf der Seite 50 jeweils eines Teiles 42 und 44.

Die beiden zwischen den beiden Teilen 42 und 44 angeordneten Keile 46 und 48 weisen jeweils, wie in der Figur 6 dargestellt, eine Basisfläche 64 und eine zu derselben schräg geneigte Fläche 66 auf. Wie aus der Figur 9 zu ersehen ist, liegen die Basisflächen 60 der beiden Teile 42 und 44 in zusammengefügtem Zustand mit den beiden Keilen 46 und 48 an den beiden Basisflächen 64 der Keile 46 und 48 an. Hierbei befinden sich die Basisflächen 64 der Keile 46 und 48 in einem parallelen Abstand voneinander.

Die Ausnehmung 16 und 18 der beiden auf Stoss mit Hilfe der Verbindungselemente 10 und 70 zu verbindenden Hohlprofilteile 12 und 14 weisen jeweils die Form einer Nut 72 auf, welche an beiden Seitenwandungen 74 und 76 mit jeweils einer in der Längsrichtung der Nut verlaufenden Hinterschneidung 78 versehen ist. Die beiden Hinterschneidungen 78 und 80 weisen jeweils schräg geneigte Flächen 82 bzw. 84 auf, welche bei Herstellung einer Verbindung von zwei Profilteilen mit den schräg geneigten Flächen 30 und 32 sowie 56 und 58 der Verbindungselemente 10 bzw. 70 in Eingriff gelangen. Weiterhin sind an den Hohlprofilteilen 12 und 14 im näheren Bereich der Verbindungsstellen der Profile einmal an einem Profilteil 12 über der Nut 72 eine parallel zu derselben verlaufende rinnenförmige Ausnehmung 86 und an dem anderen mit dem Profilteil 12 zu verbindenden Profilteil 14 über der Nut 72 eine parallel zu derselben verlaufende hakenförmige Nase 88 vorgesehen, welche miteinander in Eingriff gebracht werden können. Im unteren Bereich des Profilteiles 12 ist in der unteren Wandung 74 der Nut 72 eine parallel zu derselben verlaufende Ausnehmung 90 und an dem Profilteil 14 unter der Nut 72 eine weitere, parallel zu derselben verlaufende Ausnehmung 92 vorgesehen, wobei durch die Ausnehmungen 90 und 92 an den Profilteilen 12 und 14 sich in der Längsrichtung der Stossverbindung erstreckende Flächen 94 sowie 96 gebildet werden, welche im zusammengesetzten Zustand der Profilteile aneinanderliegen und auf diese Weise das in das Profilteil 12 eingehängte Profilteil 14 abstützen. Jedes einzelne Profilteil weist somit an einer Verbindungsstelle einmal die rinnenförmige Ausnehmung 86 und an der anderen der beiden Verbindungsstellen eine hakenförmige Nase 88 auf.

Das Verbinden von zwei Hohlprofilteilen 12 und 14 einer Tragkonstruktion 20 wird beispielsweise wie folgt bewerkstelligt:

Zunächst wird, wie in der Figur 11 gezeigt, das Profilteil 14 mit seiner hakenförmigen Nase 88 in die rinnenförmige Ausnehmung 86 des Profilteiles 12 eingehängt, wodurch bereits eine lose Verbindung zwischen den beiden Profilteilen 12 und 14 besteht. Anschliessend wird ein Verbindungselement 10 oder 70, dessen Einzelteile zuvor mit einem Kleber aneinanderhaftend zusammengefügt worden sind, in die Ausnehmungen bzw. Nuten 72 der beiden lose miteinander verbundenen Profilteile 12 und 14 geschoben. Um nunmehr die beiden Profilteile 12 und 14 fest miteinander zu verbinden, werden die Keile 22 und 24 bzw. 46 und 48 des Verbindungselementes 10 oder 70 mit Hilfe eines nicht näher dargestellten, an sich bekannten Presswerkzeuges soweit gegeneinander verschoben, bis sie eine Stellung erreichen, in welcher die schräg geneigten Flächen 30 und 32 bzw. 56 und 58 des jeweils zur Anwendung gelangenden Verbindungselementes 10 oder 70 fest an den schräg geneigten Flächen 82 und 84 der an den beiden Nuten 72 angeordneten Hinterschneidungen 78 und 80 anliegen. Die einzelen Verbindungselemente 10 oder 70 sind in vorbestimmten Abständen mit den Hohlprofilen der Tragkonstruktion 20 fest verbunden, wobei zwischen den einzelenen Verbindungselementen nicht näher dargestellte Distanzstücke angeordnet sind, um die einzelnen Verbindungselemente mit Hilfe eines Presswerkzeuges mit den Profilteilen verkeilen bzw. fest verbinden zu können, wie dieses aus den Figuren 12 und 13 zu ersehen ist.

-8-

Die Erfindung ist nicht auf die in der Zeichnung dargestellten Ausführungsformen von Verbindungselementen beschränkt, zumal unter anderem auch noch andere Ausgestaltungsmöglichkeiten der Keile bestehen.

Das Verbindungselement ist besonders vorteilhaft bei der Massenfertigung von aus Hohlprofilteilen bestehenden Tragkonstruktionen anzuwenden, da nunmehr die Profile derartiger Konstruktionen nicht mehr wie bisher in zeitraubender und kostspieliger Weise miteinander verschweisst, verschraubt oder vernietet werden müssen.

Patentansprüche

1. Keilförmiges Verbindungselement zum schnellen und festen Verbinden von vorzugsweise im Strangpressverfahren hergestellten Profilen, insbesondere zum Verbinden von Hohlprofilen auf Stoss, welche Bestandteile einer Tragkonstruktion sind und beispielsweise im Fahrzeugbau zur Anwendung gelangen, gekennzeichnet durch die Kombination folgender Merkmale:

a) dass das Verbindungselement (10 oder 70) aus mindestens zwei keilförmigen Teilen (22 und 24 oder 42, 44, 46 und 48) besteht, und dass

b) an zwei Seiten eines Verbindungselementes (10 oder 70) jeweils zwei schräg geneigte Flächen (30 und 32 bzw. 56 und 58) vorgesehen sind, welche

c) mit an Ausnehmungen (16 und 18) von zu verbindenden Hohlprofilen (12 und 14) angeordneten schräg geneigten Flächen (82 und 84) im Eingriff stehen.

2. Keilförmiges Verbindungselement nach dem Anspruch 1, dadurch gekennzeichnet, dass bei einem aus zwei Keilen (22 und 24) bestehenden Verbindungselement (10) jeder der beiden Keile auf einer Seite eine in der Längsrichtung desselben verlaufende U-förmige Kontur aufweist, deren die U-förmige Kontur bildenden Schenkel (26 und 28) jeweils mit einer schräg geneigten Fläche (30 und 32) versehen sind, welche in die Richtung zu einer am Keil schräg geneigt angeordneten Basisfläche (34) konvergierend verlaufen.

3. Keilförmiges Verbindungselement nach den Ansprüchen 1 und 2, gekennzeichnet durch eine derartige Ausbildung der beiden Keile (22 und 24) dass sich die beiden äusseren Kanten (36 und 38) von zwei mit ihrer Basisfläche (34) aneinanderliegenden Keilen (22 und 24) in einem parallelen Abstand befinden.

4. Keilförmiges Verbindungselement nach den Ansprüchen 1-3, dadurch gekennzeichnet, dass die Basisfläche (34) des Keiles (22 oder 24) mit einer quer zur Längsrichtung des Keiles verlaufenden Riffelung (40) versehen ist.

5. Keilförmiges Verbindungselement nach dem Anspruch 1, dadurch gekennzeichnet, dass bei einem aus vier Teilen bestehenden Verbindungselement (70) zwei Keile (46 und 48) zwischen zwei weiteren keilförmig ausgebildeten Teilen (42 und 44) angeordnet sind, welche auf einer Seite (50) eine U-förmige Kontur aufweisen, deren diese Kontur bildenden Schenkel (52 und 54) auf ihrer Innenseite jeweils mit einer schräg geneigten Fläche (56 und 58) versehen sind, die gemeinsam in die Richtung zu einer Basisfläche (60) der Teile (42 und 44) konvergierend verlaufen.

6. Keilförmiges Verbindungselement nach dem Anspruch 5, gekennzeichnet durch eine derartige Ausbildung der beiden Keile (46 und 48), dass sich die beiden Basisflächen (64) der beiden zusammengelegten Keile in einem parallelen Abstand voneinander befinden.

7. Keilförmiges Verbindungselement nach dem Anspruch 5, dadurch gekennzeichnet, dass die Basisfläche (60) der Teile (42 oder 44) in einem parallelen Abstand von der oberen Kante (62) des Teiles (42 oder 44) verläuft.

8. Keilförmiges Verbindungselement nach dem Anspruch 1, dadurch gekennzeichnet, dass sich die an den auf Stoss zu verbindenden Seiten von Hohlprofilteilen (12 und 14) angeordneten Ausnehmungen (16 und 18) über die gesamte Seitenlänge in Form einer Hinterschneidungen (78 und 80) aufweisenden Nut (72) erstrecken.

9. Keilförmiges Verbindungselement nach den Ansprüchen 1 und 8, dadurch gekennzeichnet, dass an jeweils einer Hinterschneidung (78 oder 80) eine schräg geneigte Fläche (82 oder 84) angeordnet ist.

10. Keilförmiges Verbindungselement nach den Ansprüchen 1, 8, und 9, dadurch gekennzeichnet, dass an der auf Stoss zu verbindenden Seite eines Hohlprofilteiles (12) eine rinnenförmig verlaufende Ausnehmung (86) und an der auf Stoss zu verbindenden Seite eines anderen Hohlprofilteiles (14) eine hakenförmige Nase (88) angeordnet ist, welche mit der rinnenförmigen Ausnehmung (86) des erstgenannten Hohlprofilteiles (12) in Eingriff gebracht werden kann.

0061994

Fig. 1
Fig. 2
Fig. 3
Fig. 4
Fig. 5
Fig. 6
Fig. 7
Fig. 8
Fig. 9
Fig. 10

## Fig. 11

12   70   20   14

## Fig. 12

XIII

10
70

12   XIII   14

## Fig. 13